# EUROPÄISCHE PATENTSCHRIFT

(11) **EP 2 148 756 B1**
(45) Veröffentlichungstag und Bekanntmachung des Hinweises auf die Patenterteilung: **19.10.2011**
(21) Anmeldenummer: 08735339.7
(22) Anmeldetag: 19.04.2008
(51) Int. Cl.: B23B 51/00, B23B 51/02

(54) **BOHRWERKZEUG SOWIE VERFAHREN ZUM BOHREN**
DRILLING TOOL AND METHOD FOR DRILLING
OUTIL ET PROCÉDÉ DE PERÇAGE

(30) Priorität: 24.05.2007 DE 102007024184
(43) Veröffentlichungstag der Anmeldung: 03.02.2010
(73) Patentinhaber: Kennametal Inc., Latrobe, PA 15650-0231 (US)
(72) Erfinder: BORSCHERT, Bernhard, Walter, 96050 Bamberg (DE)
(74) Vertreter: FDST Patentanwälte
(86) Internationale Anmeldenummer: PCT/EP2008/003171
(87) Internationale Veröffentlichungsnummer: WO 2008/141709

(56) Entgegenhaltungen:
- DE-A1- 3 318 204
- SU-A1- 1 207 648
- US-A- 4 189 266
- US-A- 4 943 236
- US-A- 5 810 826

## Beschreibung

Die Erfindung betrifft ein Bohrwerkzeug gemäß dem Oberbegriff des Anspruchs 1, das sich in Längsrichtung erstreckt und eine Bohrspitze sowie eine erste und eine zweite Hauptschneide aufweist, die sich nach außen erstrecken. Die Erfindung betrifft weiterhin ein Verfahren zum Bohren mit einem solchen Bohrwerkzeuge. Ein solches Bohrwerkzeug und ein solches Verfahren sind aus dem Dokument US 5 810 826 A bekannt.

Aus der EP 0 991 489 B1 ein Spiralbohrer zum Trockenbohren beschrieben. Beim Trockenbohren tritt das Problem auf, dass aufgrund einer nur mangelnden Kühlung der Bohrer sich im Schneidkopfbereich aufgrund der Wärmeentwicklung ausdehnt, was dazu führt, dass beim Ausziehen des Bohrers aus dem Bohrloch hohe Belastungen an den Führungsfasen auftreten.

Um diese hohen Belastungen zu vermeiden, ist bei dem Spiralbohrer gemäß der EP 0 991 489 B1 eine asymmetrische Ausgestaltung einer Querschneide vorgesehen. Aufgrund der asymmetrischen Ausgestaltung schneidet der Bohrer ein Bohrloch, das im Vergleich zu dem Außendurchmesser des Spiralbohrers einen vergrößerten Lochdurchmesser aufweist. Trotz der wärmebedingten Ausdehnung im Bereich der Bohrerschneiden kann der Bohrer daher problemlos aus dem Bohrloch wieder herausgeführt werden kann.

Für einen speziellen Anwendungsbereich, nämlich das Bohren von Löchern in aus Kunstharz gebildeten Leiterplatten, ist aus der DE 26 55 452 A ein Spezialbohrer zu entnehmen. Auch dieser weist eine asymmetrische Ausbildung des Bohrerkopfs im Bereich der Schneiden auf, um eine Vergrößerung des Bohrlochs zu erreichen. Dies wird wahlweise dadurch erreicht, dass die Schneiden unterschiedlich lang ausgebildet oder unter unterschiedlichen Spitzenwinkeln angeordnet sind. Hierdurch wird dem besonderen Problem beim Bohren für Leiterplatten Rechnung getragen, wonach nämlich Bohrmehl entsteht, welches gegen die Bohrungswand gedrückt werden kann. Durch die asymmetrische Ausgestaltung wird ein Bohrloch größer dem Außendurchmesser des Bohrers erzeugt, so dass der Bohrer an einer Längsseite von der Bohrungswand beabstandet ist.

Weitere Bohrwerkzeuge mit asymmetrischer Ausgestaltung sind beispielsweise aus der DE 33 18 204 A1, US 4 943 236 A, US 4 189 266 A sowie SU 1 207 648 A1 zu entnehmen. Auf dem Gebiet der Medizin ist aus der US 5 810 826 A ein medizinisches Instrument zur Erzeugung von Löchern, beispielsweise in menschlichen Knochen, zu entnehmen, um eine Kanüle einführen zu können. Das Instrument wird im Handbetrieb eingesetzt. Bei diesem Instrument ist eine Spitze versetzt zu einer Mittenachse angeordnet, um ein möglichst großes Loch zu erzeugen. Die Spitze kann hierbei auf der äußeren Umfangsseite angeordnet sein, so dass der Durchmesser des Instruments den Radius des ausgebildeten Lochs definiert.

Im Normalfall werden bei Bohrern im Unterschied hierzu jedoch hochsymmetrische Ausgestaltungen angestrebt, so dass ein möglichst hochgenauer Rundlauf und ein hochgenaues Bohren erreicht ist. Asymmetrien treten hierbei allenfalls als Schleiffehler auf. Die oben beschriebenen Bohrer nutzen demgegenüber die Asymmetrie gezielt zur Vermeidung von Problemen bei speziellen Anwendungsfällen. Mit der asymmetrischen Ausgestaltung tritt jedoch auch eine asymmetrische Belastung und damit ein erhöhter Verschleiß des Bohrwerkzeugs auf, wodurch die Lebensdauer verringert ist. Dies gilt insbesondere für Bohrer, wie Hartmetallbohrer oder Bohrer mit Schneideinsätzen aus einem speziellen Schneidwerkstoff, die für die Bearbeitung von hochfesten Werkstoffen, beispielsweise von Stählen, vorgesehen sind.

Aufgrund der asymmetrischen Ausgestaltung wird beim Bohrvorgang der Bohrer nämlich einseitig gegen die Bohrungswand gedrückt. Üblicherweise ist umfangsseitig am so genannten Bohrerrücken eine Führungsfase vorgesehen. Mit dieser Führungsfase liegt der Bohrer an der Bohrungswand an. Bei üblichen Bohrwerkzeugen mit hochsymmetrischer Ausgestaltung liegen bei einem zweischneidigen Bohrer die beiden Führungsfasen diametral gegenüberliegend jeweils an der Bohrungswand an und werden gleichmäßig belastet. Durch die asymmetrische Ausgestaltung wird nunmehr eine der beiden Führungsfasen übermäßig belastet, so dass deren Verschleiß deutlich größer ist. Zudem ist die Gefahr größer, dass im Falle von Anbackungen von Spanteilen an der Bohrungswand Teile der Führungsfase ausbrechen.

Der Erfindung liegt die Aufgabe zugrunde, ein Bohrwerkzeug mit asymmetrischen Ausgestaltungen anzugeben, welches eine hohe Verschleißbeständigkeit aufweist.

Die Aufgabe wird gemäß der Erfindung gelöst durch ein Bohrwerkzeug gemäß Anspruch 1, das sich in Längsrichtung erstreckt und eine Bohrspitze sowie eine erste und eine zweite Hauptschneide aufweist. Die beiden Hauptschneiden erstrecken sich in etwa radial nach außen. Die Bohrspitze ist bezüglich einer Mittenachse, die zugleich die Drehachse bildet, um einen Versatz außermittig angeordnet. Gleichzeitig ist die zweite Hauptschneide um eine Schneidhöhendifferenz höher gelegen angeordnet als die erste Hauptschneide. Zudem weist die erste Hauptschneide eine kürzere radiale Schneidenlänge als die zweite Hauptschneide auf.

Der Versatz zwischen der Mittenachse und der Bohrspitze ist größer 0,02 mm und liegt im Bereich zwischen 0,02 mm und etwa 0,06 mm. Damit liegt der Versatz in einem Bereich größer dem üblicherweise zulässigen Toleranzwert für den Rundlauf, wie er sich beispielsweise aus der DIN 6540, Teil 1 ergibt und wie er nach der DIN 6540, Teil 2 gemessen wird.

Unter Bohrwerkzeug wird hierbei allgemein ein Werkzeug verstanden, das zum Bohren verwendet wird und zumindest den Schneid- oder Bohrkopf umfasst. Das Bohrwerkzeug kann daher sowohl lediglich ein Bohrkopf sein, der an einem Bohrkörper oder einen Schaft befestigt wird, als auch ein vollständiger Bohrer mit Bohrkopf, Bohrkörper und Schaft.

Unter radialer Schneidenlänge wird hierbei der radiale Abstand zwischen dem der Bohrspitze zugewandten Ende der Hauptschneide und dem Außenumfang des Bohrerwerkzeugs verstanden.

Unter Schneidhöhendifferenz wird eine Anordnung der beiden Hauptschneiden verstanden, die sich bezüglich ihrer Position relativ zur Längsrichtung unterscheiden. In Längsrichtung von einem Bohrerschaft zur Bohrspitze gesehen ist die zweite Hauptschneide also weiter vorne angeordnet als die erste Hauptschneide. Die Definition "höher gelegen" bzw. "weiter vorne angeordnet" bezieht sich hier jeweils auf insbesondere zwei Vergleichspunkte der beiden Hauptschneiden, die den gleichen radialen Abstand zur Drehachse und damit zur Mittenachse aufweisen. Die Definition der Schneidhöhendifferenz ergibt sich insbesondere auch aus der DIN 6540, Teil 1 und Teil 2, Ausgabe April 93. Die Anordnung der beiden Hauptschneiden auf unterschiedlichen Schneidhöhen bedeutet insbesondere, dass die radial außenliegenden Enden der Hauptschneiden in Längsrichtung versetzt zueinander angeordnet sind.

Durch die außermittige Anordnung der Bohrspitze, die die längere radiale Schneidenlänge der ersten Hauptschneide nach sich zieht, wird beim Bohren ein Bohrloch erzeugt, welches einen im Vergleich zum Bohremenndurchmesser größeren Bohrlochdurchmesser aufweist. Durch dieses erste Asymmetriemerkmal wird eine erste radiale Kraftkomponente erzeugt. Ergänzend ist die kürzere zweite Hauptschneide um die Schneidhöhendifferenz höher angeordnet. Durch dieses zweite Asymmetriemerkmal wird eine zweite radiale Kraftkomponente erzeugt, die der ersten radialen Kraftkomponente entgegenwirkt, so dass die asymmetrische Belastung des Bohrers reduziert ist. Die höher gelegene zweite Hauptschneide ist hierbei bezogen auf eine definierte Bohrdrehrichtung eine so genannte vorauseilende Schneide.

Die hier beschriebene Ausgestaltung des Bohrwerkzeugs kombiniert zwei an sich üblicherweise als Schleiffehler angesehene Asymmetriemerkmale in einer Art und Weise, dass die durch die Asymmetriemerkmale jeweils hervorgerufenen asymmetrischen Belastungen des Bohrers wechselseitig entgegenwirken und sich damit kompensieren. Durch die speziell gewählte Kombination wird daher der durch die erste radiale Kraftkomponente erzeugte Anpressdruck gegen die Bohrungswand zumindest reduziert. Dadurch ist die Belastung des Bohrers, insbesondere einer der ersten Hauptschneide zugeordneten ersten Führungsfase, die an der Bohrungswand entlang läuft, deutlich reduziert.

Ein derartiges Bohrwerkzeug dient zum Bearbeiten von harten Werkstoffen, insbesondere Stählen und eignet sich insbesondere als Trockenbohrer und darüber hinaus auch zum Bohren von speziellen Werkstoffen, die ein gewisses elastisches Verhalten aufweisen. So führt nämlich die spanende Behandlung beispielsweise von Edelstahl dazu, dass im Falle des Bohrens das gebohrte Loch sich unmittelbar nach dem Bohren zusammenzieht und etwas verjüngt. Dies führt dazu, dass bei der Verwendung eines herkömmlichen Bohrers dieser im Bohrloch geklemmt werden kann.

Mit der hier beschriebenen Ausgestaltung wird in vorteilhafter Weise zum einen aufgrund des erstem Asymmetriemerkmals die Erzeugung eines vergrößerten Bohrlochs erreicht, so dass ein Verklemmen vermieden ist. Zum anderen wird durch das zweite Asymmetriemerkmal eine Reduzierung der Belastung insbesondere der ersten Führungsfase und damit eine höhere Lebensdauer erreicht.

Zweckdienlicherweise sind zum einen die Schneidhöhendifferenz und zum anderen die außermittige Anordnung sowie die längere erste Hauptschneide derart gewählt, dass die radialen Kraftkomponenten beim Bohrvorgang sich weitgehend und vorzugsweise vollständig kompensieren. Damit ist eine weitgehende und vorzugsweise vollständige symmetrische radiale Krafteinwirkung auf das Bohrwerkzeug erzielt, so dass sich eine insgesamt gleichmäßige Belastung ergibt. Um dies zu erreichen, wird beim Bohrverfahren ein Vorschub des Bohrwerkzeugs zweckdienlicherweise derart eingestellt, dass das von der ersten Hauptschneide und das von der zweiten Hauptschneide abgetragene Spanvolumen zumindest weitgehend identisch sind. Dadurch werden die in etwa gleichen radialen Kraftkomponenten hervorgerufen.

Zweckdienlicherweise liegt hierbei die Schneidhöhendifferenz im Bereich zwischen 0,03 und 0,07 mm. Die Schneidhöhendifferenz liegt daher vorzugsweise über dem zulässigen Toleranzwert für eine Schneidhöhendifferenz gemäß DIN 6540, Teil 1. Die Messung der Schneidhöhendifferenz erfolgt insbesondere nach dem Verfahren, wie es in der DIN 6540, Teil 2, Ausgabe April 93, beschrieben ist. Anstelle des Begriffs "Schneidhöhendifferenz" wird teilweise auch der Begriff "Planlauf" verwendet. Dieser gibt an, um wie viel die beiden üblicherweise gegenüberliegend angeordneten Hauptschneiden bei einer 180°-Drehung in Bohrerlängsrichtung versetzt zueinander angeordnet sind.

Gemäß einer zweckdienlichen Weiterbildung sind die beiden Hauptschneiden unter einem gleichen Teilspitzenwinkel zur Bohrspitze orientiert. Die beiden Hauptschneiden sind daher - abgesehen von der Schneidhöhendifferenz und ihrer unterschiedlichen Länge - gleich ausgebildet. Der durch die beiden Hauptschneiden gebildete Spitzenwinkel beträgt beispielsweise bei einem herkömmlichen Spiralbohrer üblicherweise etwa 135°. Üblicherweise ist daher ein stumpfer Spitzenwinkel vorgesehen. Alternativ hierzu können die beiden Hauptschneiden auch zueinander unter einem 180°-Winkel angeordnet sein, also parallel zueinander verlaufen, wie dies beispielsweise bei einem, Stufenbohrer der Fall ist.

Zweckdienlicherweise sind die beiden Hauptschneiden direkt über eine die Bohrspitze querende Querschneide miteinander verbunden, so dass eine aus Hauptschneiden und Querschneide gebildete Schneide sich durchgehend über das Bohrerzentrum hinweg erstreckt.

Alterativ hierzu ist das Bohrwerkzeug als ein Stufenbohrer ausgebildet, bei dem die Hauptschneiden bezüglich der Bohrspitze zurückversetzt angeordnet sind. Bei einem Stufenbohrer ist üblicherweise ein erstes Schneidenpaar an der vorderen Bohrspitze angeordnet. In Bohrerlängsrichtung zurückversetzt unter Ausbildung einer Stufe ist dann das zweite Schneidenpaar angeordnet, die im vorliegende Fall die beiden Hauptschneiden bilden, die zueinander die Schneidhöhendifferenz aufweisen.

Das Bohrwerkzeug ist vorzugsweise als ein Spiralbohrer ausgebildet, bei dem sich an die Hauptschneiden an einem jeweiligen Schneideck Nebenschneiden anschließen, die in Längsrichtung entlang von Spannuten verlaufen.

Die Aufgabe wird erfindungsgemäß weiterhin gelöst durch ein Verfahren gemäß Anspruch 8, zum Erzeugen eines Bohrlochs mit einem derartigen Bohrwerkzeug. Zweckdienlicherweise ist hierbei vorgesehen, dass ein Vorschub derart eingestellt wird, dass das abgetragene Spanvolumen von der ersten und der zweiten Hauptschneide zumindest weitgehend identisch sind. Der Vorschub ist daher insbesondere größer als die Schneidhöhendifferenz.

Vorzugsweise wird ein Bohrwerkzeug mit zwei in etwa um 180° drehversetzt angeordneten Hauptschneiden vorgesehen. Alternativ hierzu können auch Bohrwerkzeuge mit mehr als zwei Hauptschneiden, beispielsweise drei Hauptschneiden, eingesetzt werden. Für derartige Bohrwerkzeuge mit mehr als zwei Hauptschneiden gelten dann die gleichen Überlegungen im Hinblick auf die Kompensierung der durch die einzelnen Schneiden erzeugten radialen Kraftkomponenten.

Ausführungsbeispiele der Erfindung werden im Folgenden anhand der Zeichnung näher erläutert. Es zeigen jeweils in schematischen und stark vereinfachten Darstellungen:
- Fig. 1: einen Querschnitt durch einen Bohrkopf,
- Fig. 2: einen Spiralbohrer in einer Seitenansicht, und
- Fig. 3: einen Querschnitt durch einen Stufenbohrer.

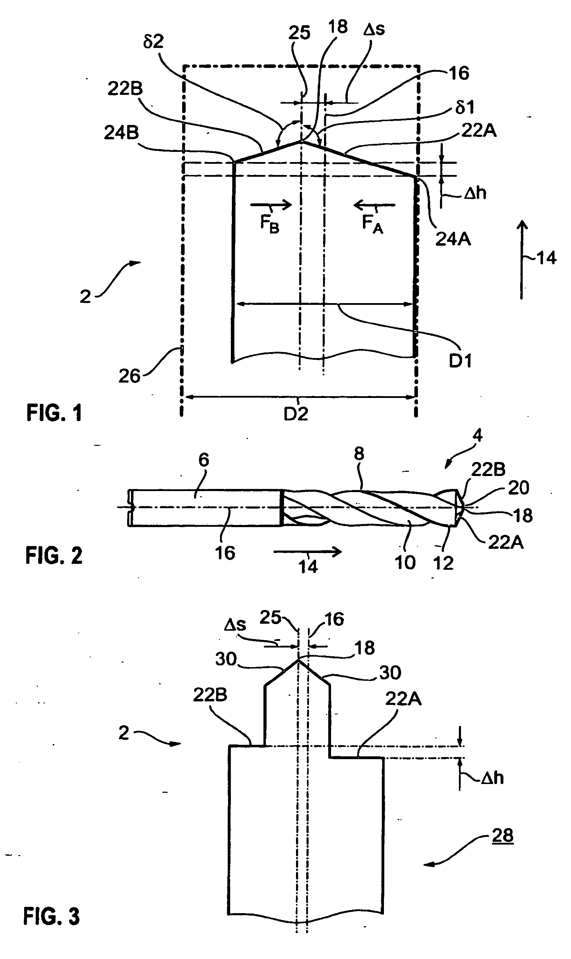

Fig. 1 zeigt in stark vereinfachter Darstellung einen Bohrkopf 2, beispielsweise eines Spiralbohrers 4, wie er in Fig. 2 dargestellt ist. Der Spiralbohrer 4 weist einen Schaft 6 auf, mit dem der Bohrer 4 in eine Maschinenhalterung eingespannt wird. An den Schaft 6 schließt sich der Bohrkörper 8 an, an dessen vorderem Ende der Bohrkopf 2 ausgebildet ist. Im Ausführungsbeispiel ist dieser einstückig mit dem Bohrkörper 8 verbunden. Alternativ hierzu kann der Bohrkopf 2 auch als separate Baueinheit unlösbar oder lösbar mit dem Bohrkörper 8 verbunden sein. Beim Spiralbohrer 4 sind in den Bohrkörper 8 spiralförmig verlaufende Spannuten 10 eingearbeitet, die an einer ihrer Randseiten jeweils von einer Nebenschneide 12 begrenzt sind. Der Umfangsbereich zwischen zwei Spannuten 10 wird als Bohrrücken bezeichnet. Am der jeweiligen Nebenschneide 12 abgewandten Ende des Bohrrückens ist üblicherweise eine Führungsfase ausgebildet. Der Spiralbohrer 4 erstreckt sich insgesamt in Längsrichtung 14 und weist eine Mittenachse 16 auf, die zugleich die Drehachse ist, um die sich der Bohrer 4 dreht, wenn er in der Maschinenhalterung eingespannt und in Betrieb ist. -

An seinem in Längsrichtung 16 gesehenem vorderen Ende weist der Bohrer 4 eine Bohrspitze 18 auf. Bei einem Spiralbohrer, wie er in Fig. 2 gezeigt ist, ist die Bohrspitze 18 Teil einer Querschneide 20, die sich über den so genannten Bohrerkem erstreckt. Beidseitig der Querschneide 20 schließen sich eine erste Hauptschneide 22A sowie eine zweite Hauptschneide 22B an.

Anhand von Fig. 1 wird die spezielle Ausgestaltung des Bohrkopfs 2 im Bereich der Bohrspitze 18 ersichtlich. Wie hieraus zu entnehmen ist, ist die Bohrspitze 18 um einen Versatz Δs beabstandet von der Mittenachse 16 angeordnet. Gleichzeitig ist die erste Hauptschneide 22A um eine Schneidhöhendifferenz Δh tiefer angeordnet als die zweite Hauptschneide 22B. Unter Schneidhöhendifferenz wird vorliegend die Differenz der radial gelegenen Schneidecken 24A,24B der beiden Hauptschneiden 22A,22B in Bezug auf die Längsrichtung 14 verstanden.

Bezüglich einer gedachten Spitzenachse 25, die durch die Bohrspitze 18 verläuft, sind die beiden Hauptschneiden 22A,22B unter jeweils einem gleichen Teilspitzenwinkel δ1 und δ2 von im Ausführungsbeispiel jeweils 66,5° angeordnet, so dass sich der übliche Spitzenwinkel von 135° ergibt.

Aufgrund des Versatzes Δs und der längeren ersten Hauptschneide 22A wird zunächst erreicht, dass ein Bohrloch 26, welches in Fig. 1 durch eine strichpunktierte Linie angedeutet ist, einen im Vergleich zu einem Bohrnenndurchmesser D1 vergrößerten Lochdurchmesser D2 aufweist. Gleichzeitig wird durch diese Asymmetrie eine erste radiale Kraftkomponente F_{A} erzeugt. Durch die höher gelegene zweite Hauptschneide 22B greift diese beim Zerspanungsvorgang tiefer in das zu bearbeitende Werkstück als die erste Hauptschneide 22A ein, so dass eine zweite radiale Kraftkomponente F_{B} erzeugt wird, die der ersten radialen Kraftkomponente F_{A} entgegenwirkt. Die beiden Kraftkomponenten F_{A},F_{B} sind nunmehr derart gewählt, dass sie sich zumindest weitgehend und vorzugsweise vollständig kompensieren, das heißt, dass bevorzugt keine resultierende radiale Krafteinwirkung auf den Bohrer 4 im Bereich des Bohrerkopfs 2 einwirkt. Insgesamt sind daher die Schneidhöhendifferenz Δh und der Versatz Δs im Hinblick auf einen speziellen Vorschub beim Bohrvorgang derart aufeinander abgestimmt, dass sich die Kraftkomponenten F_{A},F_{B} kompensieren. Unter Vorschub wird allgemein die erzwungene Wegstrecke des Bohrers 4 in Längsrichtung 14 bei einer 360°-Umdrehung verstanden.

Die zu der Fig. 1 angestellten Überlegungen lassen sich auch auf Bohrköpfe 2 mit austauschbaren Schneidkörpern, wie beispielsweise Wendeschneidplatten, übertragen. Gleichermaßen lassen sich die angestellten Überlegungen auch auf einen Stufenbohrer 28 übertragen, wie er beispielsweise in Fig. 3 stark vereinfacht dargestellt ist. Beim Stufenbohrer 28 ist die Bohrspitze 18 beabstandet zu den Hauptschneiden 22A,22B angeordnet. Diese verlaufen im Ausführungsbeispiel senkrecht zur Mittenachse 16. Im Bereich der Bohrspitze 18 sind weitere Hauptschneiden 30 angeordnet. Auch beim Stufenbohrer 28 weisen die beiden Hauptschneiden 22A,22B die Schneidhöhendifferenz Δh auf. Gleichzeitig ist die Bohrspitze 18 um einen Versatz Δs gegenüber der Mittenachse 16 versetzt angeordnet.

Das hier beschriebene Bohrwerkzeug zeichnet sich dadurch aus, dass bewusst zwei üblicherweise als Schleiffehler angesehene Asymmetriemerkmale des Bohrkopfs 2 derart miteinander kombiniert werden, dass sich die radialen Kraftkomponenten F_{A},F_{B} zumindest weitgehend kompensieren, so dass der durch eine asymmetrische Ausbildung üblicherweise hervorgerufene asymmetrische Verschleiß zumindest reduziert ist.

## Patentansprüche

1. Bohrwerkzeug (4,28), das sich in Längsrichtung (14) erstreckt und eine Bohrspitze (18) sowie eine erste und eine zweite Hauptschneide (22A,22B) aufweist, die sich nach außen erstrecken,
wobei die Bohrspitze (18) bezüglich einer zugleich die Drehachse des Bohrwerkzeugs (4,28) bildende Mittenachse (16) um einen Versatz (ΔS) außermittig angeordnet ist, und wobei die zweite Hauptschneide (22B) - bezogen auf die Längsrichtung (14) in Richtung zur Bohrspitze (18) hin - um eine Schneidhöhendifferenz (Δh) höher gelegen angeordnet ist und gleichzeitig eine kürzere radiale Schneidenlänge aufweist als die erste Hauptschneide (22A),
**dadurch gekennzeichnet, dass** der Versatz (ΔS) im Bereich wischen 0,02 mm und 0,06 mm liegt.

2. Bohrwerkzeug (4,28) nach Anspruch 1,
**dadurch gekennzeichnet;**
**dass** beim Bohrvorgang durch die höhere Anordnung der zweiten Hauptschneide (22B) eine zweite radiale Kraftkomponente (F_{B}) und durch die außermittige Anordnung der Bohrspitze (18) sowie der längeren ersten Hauptschneide (22A) eine erste radiale Kraftkomponente (F_{A}) erzeugt werden, die sich zumindest weitgehend und vorzugsweise vollständig kompensieren.

3. Bohrwerkzeug (4,28) nach Anspruch 1 oder 2,
**dadurch gekennzeichnet,**
**dass**, die Schneidhöhendifferenz (Δh) im Bereich zwischen 0,03 und 0,07 mm liegt.

4. Bohrwerkzeug (4) nach einem der vorhergehenden Ansprüche,
**dadurch gekennzeichnet,**
**dass** die beiden Hauptschneiden (22A,22B) unter dem gleichen Teilspitzenwinkel (δ1,δ2) zur Bohrspitze (18) orientiert sind.

5. Bohrwerkzeug (4) nach einem der vorhergehenden Ansprüche,
**dadurch gekennzeichnet,**
**dass** die beiden Hauptschneiden (22A,22B) über eine die Bohrspitze (18) querende Querschneide (20) miteinander verbunden sind.

6. Bohrwerkzeug nach einem der Ansprüche 1 bis 4,
**dadurch gekennzeichnet,**
**dass** es als Stufenbohrer (28) ausgebildet ist und die Hauptschneiden (22A,22B) bezüglich der Bohrspitze (18) zurückversetzt angeordnet sind.

7. Bohrwerkzeug nach einem der vorhergehenden Ansprüche,
**dadurch gekennzeichnet,**
**dass** es als Spiralbohrer (4) mit sich an die Hauptschneiden (22A,22B) anschließenden Nebenschneiden (12) ausgebildet ist, die in Längsrichtung (14) an Spannuten (10) entlang verlaufen.

8. Verfahren zum Erzeugen eines Bohrlochs (26) mit einem Bohrwerkzeug (4,28) nach einem der vorhergehenden Ansprüche.

9. Verfahren nach Anspruch 8, bei dem ein Vorschub des Bohrwerkzeugs (4,28) derart eingestellt ist, dass ein von der ersten Hauptschneide (22A) und ein von der zweiten Hauptschneide (22B) abgetragenes Spanvolumen zumindest weitgehend identisch sind.

## Claims

1. Drilling tool (4, 28) which extends in the longitudinal direction (14) and has a drill point (18) and a first and a second main cutting edge (22A, 22B) which extend outward, the drill point (18) being arranged eccentrically by an offset (Δs) with respect to a center axis (16), which is at the same time the rotation axis of the drilling tool (4, 28), and the second main cutting edge (22B) - with respect to the longitudinal direction (14) toward the drill point (18) - being arranged at a higher level by a cutting height difference (Δh) and at the same time having a shorter radial cutting edge length than the first main cutting edge (22A), **characterized in that** the offset (Δs) is within the range of between 0.02 mm and 0.06 mm.

2. Drilling tool (4, 28) according to Claim 1, **characterized in that**, during the drilling operation, a second radial force component (F_{B}) is produced by the higher arrangement of the second main cutting edge (22B) and a first radial force component (F_{A}) is produced by the eccentric arrangement of the drill point (18) and by the longer first main cutting edge (22A), said radial force components (F_{A}, F_{B}) at least largely and preferably completely compensating one another.

3. Drilling tool (4, 28) according to Claim 1 or 2, **characterized in that** the cutting height difference (Δh) is within the range of between 0.03 and 0.07 mm.

4. Drilling tool (4) according to one of the preceding claims, **characterized in that** the two main cutting edges (22A, 22B) are arranged at the same partial point angle (δ1, δ2) relative to the drill point (18).

5. Drilling tool (4) according to one of the preceding claims, **characterized in that** the two main cutting edges (22A, 22B) are connected to one another via a chisel edge (20) crossing the drill point (18).

6. Drilling tool according to one of Claims 1 to 4, **characterized in that** it is designed as a step drill (28) and the main cutting edges (22A, 22B) are set back relative to the drill point (18).

7. Drilling tool according to one of the preceding claims, **characterized in that** it is designed as a twist drill (4) having secondary cutting edges (12) which adjoin the main cutting edges (22A, 22B) and run along flutes (10) in the longitudinal direction (14).

8. Method of producing a drill hole (26) using a drilling tool (4, 28) according to one of the preceding claims.

9. Method according to Claim 8, in which a feed of the drilling tool (4, 28) is set in such a way that a chip volume removed by the first main cutting edge (22A) and a chip volume removed by the second main cutting edge (22B) are at least largely identical.

## Revendications

1. Outil de perçage (4, 28) qui s'étend dans la direction longitudinale (14) et qui présente une pointe de perçage (18) ainsi qu'un premier et un deuxième tranchant principal (22A, 22B), lesquels s'étendent vers l'extérieur,
la pointe de perçage (18) étant disposée par rapport à un axe médian (16) formant en même temps l'axe de rotation de l'outil de perçage (4, 28) de manière excentrée d'un décalage (ΔS), et le deuxième tranchant principal (22B) - par rapport à la direction longitudinale (14) dans la direction de la pointe de perçage (18) - étant disposé plus haut d'une différence de hauteur de tranchant (Ah) et présentant en même temps une longueur de tranchant radiale plus courte que le premier tranchant principal (22A),
**caractérisé en ce que** le décalage (ΔS) est compris entre 0,02 mm et 0,06 mm.

2. Outil de perçage (4, 28) selon la revendication 1, **caractérisé en ce que**
lors de l'opération de perçage, du fait de l'agencement plus élevé du deuxième tranchant principal (22B), une deuxième composante de force radiale (F_{B}) est produite, et du fait de l'agencement excentré de la pointe de perçage (18) ainsi que du premier tranchant principal plus long (22A), une première composante radiale (F_{A}) est produite, lesquelles se compensent au moins substantiellement et de préférence complètement.

3. Outil de perçage (4, 28) selon la revendication 1 ou 2,
**caractérisé en ce que**
la différence de hauteur de tranchant (Δh) est comprise entre 0,03 et 0,07 mm.

4. Outil de perçage (4) selon l'une quelconque des revendications précédentes,
**caractérisé en ce que**
les deux tranchants principaux (22A, 22B) sont orientés suivant le même angle de pointe partiel (δ₁, δ₂) par rapport à la pointe de perçage (18).

5. Outil de perçage (4) selon l'une quelconque des revendications précédentes,
**caractérisé en ce que**
les deux tranchants principaux (22A, 22B) sont connectés l'un à l'autre par le biais d'un tranchant transversal (20) traversant la pointe de perçage (18).

6. Outil de perçage selon l'une quelconque des revendications 1 à 4,
**caractérisé en ce**
**qu'**il est réalisé sous forme de foret étagé (28) et les tranchants principaux (22A, 22B) sont disposés de manière décalée en retrait par rapport à la pointe de perçage (18).

7. Outil de perçage selon l'une quelconque des revendications précédentes,
**caractérisé en ce**
**qu'**il est réalisé sous forme de foret hélicoïdal (4) avec des tranchants secondaires (12) se raccordant aux tranchants principaux (22A, 22B), qui s'étendent dans la direction longitudinale (14) le long de rainures d'enlèvement de copeaux (10).

8. Procédé de fabrication d'un trou de perçage (26) avec un outil de perçage (4, 28) selon l'une quelconque des revendications précédentes.

9. Procédé selon la revendication 8, dans lequel une avance de l'outil de perçage (4, 28) est ajustée de telle sorte que les volumes d'enlèvement de copeaux enlevés par le premier tranchant principal (22A) et par le deuxième tranchant principal (22B) soient au moins substantiellement identiques.
